# EUROPEAN PATENT APPLICATION

(11) **EP 3 316 650 A1**
(43) Date of publication of application: **02.05.2018**
(21) Application number: 16813599.4
(22) Date of filing: 09.05.2016
(51) Int. Cl.: H04W 74/08

(54) **DATA TRANSMISSION METHOD AND DEVICE**

(30) Priority: 26.06.2015 CN 201510366754
(71) Applicant: ZTE Corporation, Shenzhen, Guangdong 518057 (CN)
(72) Inventor: LI, Xincai, Shenzhen Guangdong 518057 (CN); GOU, Wei, Shenzhen Guangdong 518057 (CN); ZHAO, Yajun, Shenzhen Guangdong 518057 (CN)
(74) Representative: Regimbeau
(86) International application number: PCT/CN2016/081437
(87) International publication number: WO 2016/206483

(57) **Abstract**

A data transmission method includes: transmitting by a base station a configuration signaling to an UE, wherein the configuration signaling carries a CCA parameter of the UE and an uplink transmission parameter of the UE; and receiving, by the base station, uplink data which are transmitted by the UE according to the configuration signaling. By means of the above method, a problem of how an uplink UE performs a LBT and implements multi-user frequency multiplexing in the related art when a LTE system operates in an unlicensed carrier frequency band is solved, thereby improving the spectrum efficiency.

## Description

### Technical Field

The present application relates, but is not limited, to the telecommunication field, and in particular relates to a data transmission method and data transmission device.

### Background

In the evolution process of Long Term Evolution (LTE for short) technology, the LTE Rel-13 version project was started in September 2014, an important part of which is that an LTE system operates with unlicensed carriers. This technology will enable the LTE system to use existing unlicensed carriers and greatly enhance potential spectrum resources of the LTE system, thereby enabling the LTE system to obtain lower spectrum cost.

However, there are many problems when the LTE uses unlicensed carriers. First, in some countries and regions, there are corresponding regulatory policies on the use of unlicensed spectrum. For example, for Listen-Before-Talk (LBT for short) which is also referred to as Clear Channel Assessment (CCA for short), two types are defined, one is the Frame-based Equipment (FBE), and the other one is Load-based Equipment (LBE). For the FBE manner, a position of a site is fixed during every CCA and just the initial CCA needs to be performed, so timing is easy and the sites of a same operator can achieve same frequency multiplex through deployment. Moreover, each transmission takes a fixed time duration and there is no random back off. For the LBE manner, the position of the site during every CCA may be started at any time, the CCA may be started as long as there is a load, and the transmission time duration may be randomly determined according to the size of the load as long as the transmission time duration is within the maximum occupancy time. However, multi-site or LTE uplink multi-user frequency multiplex are difficult. At present, when LTE is in an unlicensed operation, it is still inconclusive about the uplink data transmission, how a user equipment (UE) performs LBT and a frame structure of a data transmission.

For a License-Assisted Access (LAA for short) uplink, when multiple users are scheduled by a same base station, the following problems occur: When the user performs LBT out of synchronization, if the first user succeeding in competition transmits data immediately after the completing of CAA, it is caused that other user equipment (UE) fails to perform CCA detection on the channel, that is, other UE cannot perform the uplink data transmission, resulting in difficulties in uplink multi-user multiplexing.

In addition, when the sub-frame is the uplink sub-frame where a SRS is transmitted, if the Sounding Reference Signal (SRS) is still transmitted in the last symbol, it may affect CCA detections of other users. How to design an SRS sub-frame structure to ensure that the SRS is sent without hindering the CCA detections of other users or ensure a data multiplexing transmission for the next scheduled sub-frame is also a problem to be solved.

At present, there is no effective solution proposed with respect to the above problems in the related art.

### Summary

The following is a summary of the topics described in detail in this invention. This summary is not intended to limit the scope of the claims.

Embodiments of the present invention provide a data transmission method and device for at least solving the problem of how an uplink UE performs a LBT and implements multi-user frequency multiplexing in the related art when a LTE system operates in an unlicensed carrier frequency band.

According to an aspect of embodiments of the present invention, a data transmission method is provided. The method includes: transmitting, by a base station, a configuration signaling to a user equipment (UE), wherein the configuration signaling carries a clear channel assessment (CCA) parameter of the UE and an uplink transmission parameter of the UE; and receiving, by the base station, uplink data which are transmitted by the UE according to the configuration signaling.

Optionally,
the CCA parameter includes at least one of: a back-off value N of an extended CCA, a CCA window length CW, and a CCA beginning symbol position configured by the base station for the UE;
the uplink transmission parameter includes at least one of: indication information of sub-frame position, positions and quantity of physical resource blocks (PRB) assigned to each sub-frame, a modulation and coding scheme (MCS), a hybrid automatic repeat request (HARQ) process number, and a carrier indication information which are configured by the base station for the UE for data transmission in unlicensed carriers.

Optionally, the CCA parameter and the uplink transmission parameter are determined by one of the following ways: determining, by the base station, the CCA parameter, the carrier indication information and the MCS based on a plurality of carrier measurement results reported by the UE; or determining, by the base station, the CCA parameter based on a statistic result; or configuring, by the base station, UEs, which are scheduled to a same sub-frame and distances between geographical positions of which are within a predefined range, with the same CCA parameter or the same set of CCA parameters; or determining, by the base station, the CCA parameter for each UE based on a service type or priority of the UE; wherein when the base station schedules a plurality of UEs to perform data transmission in a same sub-frame, the base station instructs a multiplexed UE to only perform one initial CCA at a predetermined time; when only one UE is scheduled in one sub-frame, the base station configures the only one UE with a CCA manner of the initial CCA plus an extended CCA.

Optionally, the configuring, by the base station, the CCA parameter of the UE includes: configuring, by the base station, a difference between a beginning position where the UE performs the CCA and a beginning time of the data transmission to be a duration of one initial CCA; or configuring, by the base station, a difference between a beginning time when the UE performs the CCA and the beginning time of the data transmission to be the duration of the initial CCA plus M unit time durations of the extended CCA, wherein M is a pre-defined integer value greater than or equal to 0; or configuring, by the base station, a difference between a time when the UE starts to perform and the beginning time of the data transmission to be the duration of the initial CCA plus the back-off value N further plus K unit time durations of the extended CCA, wherein K is a pre-defined integer value greater than or equal to 0.

Optionally, the sub-frame position where the uplink data transmission is located is determined by one of the following ways: every sub-frame position where the uplink data transmission is located is determined based on a pre-defined timing relationship of an uplink grant ; or a first sub-frame position of the uplink data transmission is determined according to the pre-defined timing relationship of the uplink grant, and remaining sub-frames are determined based on the indication information of sub-frame position in the configuration signaling; or all sub-frame positions of the uplink data transmission are determined based on the indication information of sub-frame position in the configuration signaling.

Optionally, the receiving, by the base station, the uplink data which are transmitted by the UE according to the configuration signaling includes: receiving, by the base station, the uplink data which are transmitted by the UE from a first orthogonal frequency division multiplexing (OFDM) symbol of a sub-frame boundary; or receiving, by the base station, the uplink data which are started to be transmitted by the UE from a first complete OFDM symbol after the CCA is successful; or receiving, by the base station, the uplink data which are started to be transmitted by the UE just after the CCA is successful.

Optionally, when the base station configures the UE with a plurality of sub-frames for transmission, downlink control information (DCI) of the plurality of sub-frames is carried by a physical downlink control channel (PDCCH), wherein indication information of positions of the plurality of sub-frames is bitmap indicating or positions of the plurality of sub-frames are indicated by an initial frame and number of consecutive sub-frames.

Optionally, the configuration signaling is a downlink control information (DCI) signaling and/or a radio resource control (RRC) signaling.

According to another aspect of the present invention, a data transmission method is provided. The method includes: receiving, by a user equipment (UE), a configuration signaling transmitted by a base station, wherein the configuration signaling carries a clear channel assessment (CCA) parameter of the UE and an uplink transmission parameter of the UE; and transmitting, by the UE, uplink data to the base station according to the configuration signaling.

Optionally,
the CCA parameter comprises at least one of: a back-off value N of an extended CCA, a CCA window length CW, and a CCA beginning symbol position configured by the base station for the UE;
the uplink transmission parameter comprises at least one of: indication information of sub-frame position, positions and quantity of physical resource blocks (PRBs) assigned to each sub-frame, a modulation and coding scheme (MCS), a hybrid automatic repeat request (HARQ) process number, and a carrier indication information which are configured by the base station for the UE for data transmission in unlicensed carriers.

Optionally, the transmitting, by the UE, the uplink data to the base station according to the configuration signaling includes:
continuing performing, by the UE, the CCA before the uplink data are transmitted and when the back-off value or a value of a counter is reduced to zero, and transmitting the uplink data when reaching the beginning boundary of the uplink data transmission and a channel is idle; or entering, by the UE, a waiting state and starting to transmit the uplink data at uplink data transmission time; or waiting, by the UE, firstly, and then re-performing one initial CCA or extended CCA in unit length at a pre-defined time prior to the uplink data transmission, and transmitting the uplink data after successfully performing the initial CCA or the extended CCA in unit length; or transmitting an occupancy signal by the UE, wherein a time domain length or energy of the occupancy signal is less than a pre-defined threshold;
abandoning, by the UE, transmission of the uplink data, clearing the value of the counter, and re-performing the CCA when the UE reaches a time of transmitting the uplink data according to the pre-defined timing relationship of an uplink grant and the value of the counter is not reduced to zero; or continuing performing, by the UE, the CCA without clearing the value of the counter, and performing the uplink data transmission when the value of the counter is reduced to zero at a scheduled subsequent sub-frame boundary.

Optionally, the transmitting, by the UE, the uplink data to the base station according to the configuration signaling includes:
directly transmitting, by the UE, retransmitted uplink data or uplink data having a high priority, after the UE succeeds in performing one initial CCA, wherein the uplink data having a high priority comprises acknowledge (ACK) information or non-acknowledge (NACK) information, channel state feedback information (CSI), a channel sounding reference signal (SRS) and a physical random access channel (PRACH);
transmitting, by the UE, the uplink data or uplink data of a self-scheduled UE, after the UE succeeds in performing the CCA according to a pre-defined or configured contention window size or the configured back-off value; and
transmitting, by the UE, the uplink data after the UE succeeds in performing the CCA according to the back-off value configured by the base station or a random back-off value generated by a variable contention window or a pre-defined contention window, wherein the UE is cross-carrier scheduled.

Optionally, the transmitting, by the UE, the uplink data to the base station according to the configuration signaling includes:
performing, by the UE, one CCA before a first transmission sub-frame when the UE continuously schedules a plurality of sub-frames, transmitting the uplink data in a plurality of consecutive sub-frames satisfying an occupancy time after successfully performing the CCA; and receiving, by the UE, an indication signaling transmitted by the base station if a subsequent sub-frame is scheduled by the UE, wherein the indication signaling is used for notifying the UE which transmits the uplink data to vacate a last symbol of the sub-frame by a pre-defined time domain length or an indicated time domain length for other UE CAA, and is used for knocking out a physical uplink shared channel (PUSCH) at a corresponding position; or
performing, by the UE according to a schedule for a next sub-frame indicated by the base station, the CCA at a position of a physical resource block (PRB) where the schedule is located; or
performing, by the UE according to a schedule transmission for the next sub-frame indicated by the base station, the CCA on remaining resource blocks (RBs) of a system bandwidth excluding RBs where a continuous transmission UE is located; or
transmitting, by the UE, the uplink data on the next sub-frame according to the schedule of the indication information transmitted by the base station.

Optionally, the method further includes selecting, by the UE itself, a CCA manner and the CCA parameter to perform CCA, when the UE does not receive the CCA parameter transmitted by the base station.

Optionally, a manner that the UE performs CCA comprises at least one of:
every K sub-frames only include one initial CCA and the CCA is at a last symbol position of the sub-frame or a first symbol position of the sub-frame;
every K sub-frames include one initial CCA and extended CCAs, wherein a beginning position of the initial CCA is a pre-defined value, or configured by the base station, and a difference between the position of initial CCA and an initial time of the data transmission is a time duration of the initial CCA plus M unit time durations of the extended CCA,
wherein K is an integer greater than or equal to 1, M is greater than or equal to the back-off value N of the extended CCA, N is configured by the base station or is a pre-defined value or is randomly selected by the UE from [0, CW], said CW is a pre-defined value or a variable value adjusted according to a feedback result of the base station or a variable value adjusted according to a detection result of the CCA execution of the UE.

Optionally, the duration of the initial CCA as well as the unit time duration of the extended CCA are pre-defined values.

Optionally, when the sub-frame where the uplink data are transmitted is a sub-frame transmitted by a periodic or non-periodic channel sounding reference signal (SRS), structure of a sub-frame transmitted by the UE includes one of the followings:
the UE transmits the SRS at the last symbol of the sub-frame, wherein the sub-frame is used for knocking out an idle region of the CCA; another UE in the next sub-frame is scheduled to be transmitted at a position of the next sub-frame schedule by detecting the SRS; or the UE transmitted by the sub-frame enables another sub-frame to schedule the UE to be transmitted in the next sub-frame through a manner that a pre-defined symbol resource element (RE) is muting, wherein a muting pattern of the pre-defined symbol RE is cell-specific;
a symbol plus a physical uplink shared channel (PUSCH) having the duration of CCA are knocked out from an end of an uplink sub-frame, wherein a position of the knocked out PUSCH is used for transmitting the SRS and performing the CCA by the UE;
the SRS is transmitted at a beginning position of the last symbol, wherein a total duration of the SRS plus the CCA is equal to a length of one symbol;
the SRS is arranged at a first or a pre-defined symbol position for transmission, wherein the end of the sub-frame is the idle region for preforming the CCA by the UE;
the SRS is transmitted at a position before the sub-frame that transmits the uplink data after the CCA is successfully performed.

According to a still another aspect, a data transmission device is provided. The data transmission device is applied a base station side and includes: a first transmitting module configured to transmit a configuration signaling to a user equipment (UE), wherein the configuration signaling carries a clear channel assessment (CCA) parameter of the UE and an uplink transmission parameter of the UE; and a first receiving module configured to receive uplink data which are transmitted by the UE according to the configuration signaling.

According to a still another aspect, a data transmission device is provided. The data transmission device is applied a user equipment (UE) side, and includes: a second receiving module configured to receive a configuration signaling transmitted by a base station, wherein the configuration signaling carries a clear channel assessment (CCA) parameter of the UE and an uplink transmission parameter of the UE; and a second transmitting module configured to transmit uplink data to the base station according to the configuration signaling.

Embodiments of the present invention further provide a computer-readable storage medium storing computer-executable instructions that, when executed, implement and realize the data transmission method applied to the base station side.

Embodiments of the present invention further provide a computer-readable storage medium storing computer-executable instructions that, when executed, implement and realize the data transmission method applied to the user equipment side.

In embodiments of the present invention, through a way that the configuration signaling carrying the CCA parameter of the UE and the uplink transmission parameter of the UE is transmitted to the UE by the base station, and then the base station receives the uplink data transmitted by the UE according to the configuration signaling, a problem of how an uplink UE performs a LBT and implements multi-user frequency multiplexing in the related art when a LTE system operates in an unlicensed carrier frequency band is solved, thereby improving the spectrum efficiency.

After reading and understanding of drawings and detailed description, other aspects are understandable.

### Description of Drawings

The accompanying drawings described herein are used for providing a further understanding of the present application and forming a part of the present application. The schematic embodiments and the descriptions of thereof are used for explaining the application and do not constitute improper limitations to the present application. In the accompanying drawings:
FIG. 1 is a flowchart I illustrating a data transmission method according to an embodiment of the present invention;
FIG. 2 is a flowchart II illustrating a data transmission method according to an embodiment of the present invention;
FIG. 3 is a structural block diagram I illustrating a data transmission device according to an embodiment of the present invention;
FIG. 4 is a structural block diagram II illustrating a data transmission device according to an embodiment of the present invention;
FIG. 5 is a schematic diagram illustrating a frame-based equipment (FBE) LBT mechanism according to an optional embodiment of the present application;
FIG. 6 is a schematic diagram illustrating a load-based equipment (LBE) LBT mechanism according to an optional embodiment of the present application;
FIG. 7 is a schematic diagram illustrating a data transmission manner in an optional embodiment II of the present application;
FIG. 8 is a schematic diagram illustrating a resource competition and a data transmission manner in an optional embodiment III of the present application;
FIG. 9 is a schematic diagram illustrating a resource competition and a data transmission manner in an optional embodiment IV of the present application;
FIG. 10 is a schematic diagram illustrating a resource competition and a data transmission manner of a site in an optional embodiment V of the present application;
FIG. 11 is a schematic diagram illustrating uplink data transmission in an optional embodiment VI of the present application;
FIG. 12 is a schematic diagram illustrating an uplink sub-frame transmission mechanism in an optional embodiment VII of the present application;
FIG. 13 is a schematic diagram illustrating an uplink transmission mechanism of two UEs in an optional embodiment VIII of the present application;
FIG. 14 is a schematic diagram illustrating a SRS sub-frame transmission method in an optional embodiment IX of the present application;
FIG. 15 is a schematic diagram illustrating an uplink sub-frame transmission method in the optional embodiment IX of the present application;
FIG. 16 is a flowchart illustrating implementation at a terminal side according to an optional embodiment X of the present application; and
FIG. 17 is a flowchart illustrating implementation at a base station side according to an optional embodiment XI of the present application.

### Detailed description

It should be noted that, in the case of no conflict, embodiments in the present application and features in the embodiments may be combined with each other. The present application will be described in detail below with reference to the accompanying drawings and embodiments.

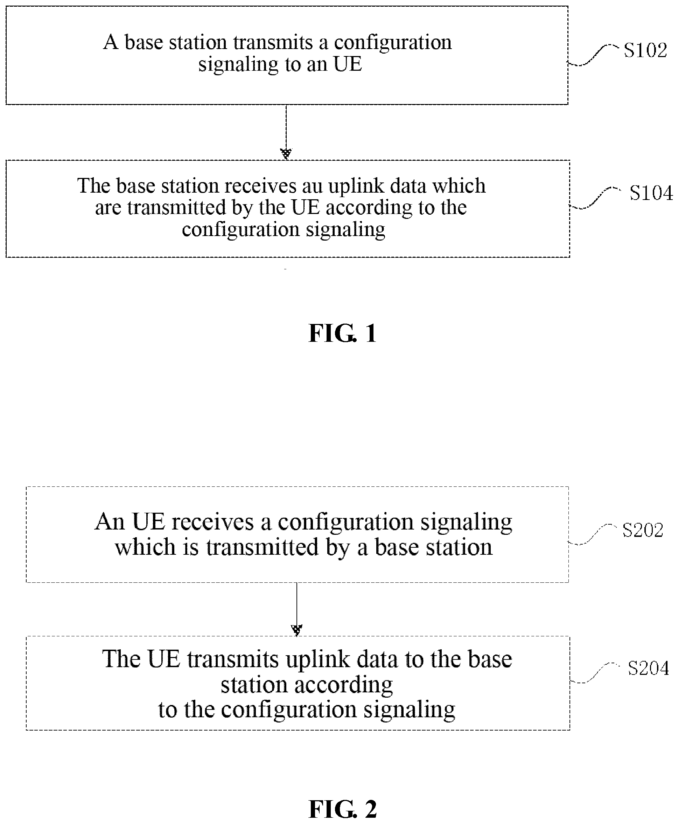

A data transmission method is provided in the present embodiment. FIG. 1 is a flowchart I illustrating a data transmission method according to an embodiment of the present invention. As shown in FIG. 1, the method includes the following steps.

In step S102, a base station transmits a configuration signaling to a user equipment (UE). The configuration signaling carries a clear channel assessment (CCA) parameter of the UE and an uplink transmission parameter of the UE.

In step S104, the base station receives uplink data which are transmitted by the UE according to the configuration signaling.

Through the steps S102 and S104 in the present embodiment, what is adopted is a manner that the base station transmits the configuration signaling, carrying the CCA parameter of the UE and the uplink transmission parameter of the UE, to the UE and then the base station receives the uplink data which are transmitted by the UE according to the configuration signaling, and a problem of how an uplink UE performs LBT and implements multi-user frequency multiplexing in the related art when a LTE system operates in an unlicensed carrier frequency band is solved, thereby improving the spectrum efficiency.

The CCA parameter involved in the present embodiment may include at least one of: a back-off value N of an extended CCA, a CCA window length CW, and a CCA beginning symbol position configured by the base station for the UE. The uplink transmission parameter involved in the present embodiment may include at least one of: indication information of sub-frame position, positions and quantity of physical resource blocks (PRB) assigned to each sub-frame, a modulation and coding scheme (MCS), a hybrid automatic repeat request (HARQ) process number, and a carrier indication information which are configured by the base station for the UE for data transmission in unlicensed carriers.

In optional implementations of the present embodiment, the CCA parameter and the uplink transmission parameter are determined by the base station through one of the following ways. The bases station determines the CCA parameter, the carrier indication information and the MCS based on a plurality of carrier measurement results reported by the UE. Alternatively, the base station determines the CCA parameter based on a statistic result. Alternatively, the base station configures the UEs, which are scheduled to a same sub-frame and distances between geographical positions of which are within a predefined range, with the same CCA parameter or the same set of CCA parameters. Alternatively, the base station determines the CCA parameter for each UE based on a service type or priority of the UE. When the base station schedules a plurality of UEs to perform data transmission in a same sub-frame, the base station instructs a multiplexed UE to only perform one initial CCA at a predetermined time. When only one UE is scheduled in one sub-frame, the base station configures the only one UE with a CCA manner of the initial CCA plus an extended CCA.

In addition, it should be noted that the CCA parameter of the UE configured by the base station related in the present embodiment includes: a difference between a beginning position where the UE performs the CCA and a beginning time of the data transmission is configured by the base station to be a duration of one initial CCA; or, the difference between a beginning time where the UE performs the CCA and the beginning time of the data transmission is configured by the base station to be the duration of the initial CCA and M unit time durations of the extended CCA, where M is a pre-defined integer value greater than or equal to zero; or, the difference between a time when the UE starts to perform the CCA and the beginning time of the data transmission is configured by the base station to be the duration of the initial CCA plus back-off value N and plus K unit time durations of the extended CCA, where K is a pre-defined integer value greater than or equal to zero.

Optionally, the sub-frame positions where the uplink data transmission involved in the present embodiment is located are determined through one of the following ways. Every sub-frame position where the uplink data transmission is located is determined by a pre-defined timing relationship of an uplink grant. Alternatively, a first sub-frame position of the uplink data transmission is determined according to the pre-defined timing relationship of the uplink grant, and remaining sub-frames are determined according to the indication information of sub-frame position in the configuration signaling. Alternatively, positions of all sub-frames of the uplink data transmission are determined according to the information of sub-frame position in the configuration signaling.

In optional implementations of the present embodiment, the base station may receive the uplink data which are transmitted by the UE according to the configuration signaling by the following ways. The base station receives the uplink data which are transmitted by the UE from a first orthogonal frequency division multiplexing (OFDM) symbol of a sub-frame boundary; or the base station receives the uplink data which are started to be transmitted from a first complete OFDM symbol after the CCA is successful; or the base station receives the uplink data which are started to be transmitted just after the CCA is successful.

Optionally, when the base station configures the UE with a plurality of sub-frames for transmission, downlink control information (DCI) of the plurality of sub-frames is carried by a physical downlink control channel (PDCCH). The indication information of positions of the plurality of sub-frames is bitmap indicating, and alternatively, positions of the plurality of sub-frames are indicated by an initial frame and number of consecutive sub-frames.

It should be noted that the configuration signaling involved in the present embodiment is a downlink control information (DCI) signaling and/or a radio resource control (RRC) signaling.

FIG. 2 is a flowchart II illustrating a data transmission method according to an embodiment of the present invention. As shown in FIG. 2, the method includes the following steps.

In step S202, a user equipment (UE) receives a configuration signaling transmitted by a base station. The configuration signaling carries a clear channel assessment (CCA) parameter of the UE and an uplink transmission parameter of the UE.

In step S204, the UE transmits uplink data to the base station according to the configuration signaling.

The CCA parameter involved in the present embodiment may include at least one of: a back-off value N of an extended CCA, a CCA window length CW, and a CCA beginning symbol position configured by the base station for the UE. The uplink transmission parameter involved in the present embodiment may include at least one of: indication information of sub-frame position, positions and quantity of physical resource blocks (PRB) assigned to each sub-frame, a modulation and coding scheme (MCS), a hybrid automatic repeat request (HARQ) process number, and a carrier indication information which are configured by the base station for the UE for data transmission in unlicensed carriers.

In the present embodiment, the UE may transmit the uplink data to the base station according to the configuration signaling through the following ways.

Before the uplink data are transmitted, when the back-off value or a value of a counter is reduced to zero, the UE continues performing the CCA to a beginning boundary of the uplink data transmission, and the UE transmits the uplink data when a channel is idle. Alternatively, the UE enters a waiting state, and starts to transmit the uplink data at an uplink data transmission time. Alternatively, the UE waits firstly, and then re-performs one initial CCA or the extended CCA in unit length at a pre-defined time prior to the uplink data transmission, and transmits the uplink data after the success of the re-performing one initial CCA or the extended CCA in unit length. Alternatively, the UE transmits an occupancy signal, and a time domain length or energy of the occupancy signal is less than a pre-defined threshold.

If the UE reaches a time of transmitting the uplink data according to the pre-defined timing relationship of the uplink grant and the value of the counter is not reduced to zero, the UE abandons transmission of the uplink data, clears the value of the counter, and re-performs the CCA; or the UE does not clear the value of the counter and continues performing the CCA until a value of a counter at a scheduled subsequent sub-frame boundary is reduced to zero, and performs the above uplink data transmission.

In another optional implementation of the present embodiment, the manner that the UE transmits the uplink data to the base station according to the configuration signaling may be achieved by the following ways.

After the UE succeeds in performing one initial CCA, the UE directly transmits a retransmitted uplink data or uplink data having a high priority. The uplink data having a high priority includes acknowledge (ACK) information or non-acknowledge (NACK) information, channel state feedback information (CSI), a channel sounding reference signal (SRS) and a physical random access channel (PRACH).

The UE transmits the uplink data or uplink data of a self-scheduled UE, after the UE succeeds in performing the CCA according to a pre-defined or configured contention window size or a configured back-off value.

The UE transmits the uplink data after the UE succeeds in performing the CCA according to the back-off value configured by the base station or a random back-off value generated by a variable contention window or a pre-defined contention window, wherein the UE is cross-carrier scheduled.

In still another optional implementation of the present embodiment, the UE transmits the uplink data to the base station according to the configuration signaling through the following ways.

When the UE continuously schedules a plurality of sub-frames, the UE performs one CCA before a first transmission sub-frame, and after performing this CCA successfully the UE transmits the uplink data in a plurality of consecutive sub-frames satisfying an occupancy time. If a subsequent sub-frame is also scheduled by the UE, the UE receives an indication signaling transmitted by the base station. The indication signaling is used for notifying the UE transmitting the uplink data to vacate a last symbol of the sub-frame by a pre-defined time domain length or an indicated time domain length for other UE CAA, and is used for knocking out a physical uplink shared channel at a corresponding position.

Alternatively, the UE performs, according to a schedule for a next sub-frame indicated by the base station, the CCA at a position of a physical resource block (PRB) where the schedule is located.

Alternatively, the UE performs, according to a schedule transmission for the next sub-frame indicated by the base station, the CCA on remaining RBs of a system bandwidth excluding RBs where a continuous transmission UE is located.

Alternatively, the UE transmits the uplink data on the next sub-frame according to the schedule of the indication information transmitted by the base station.

In addition, the method further includes: the UE selecting a CCA manner and the CCA parameter to perform CCA by itself, when the UE does not receive the CCA parameter transmitted by the base station.

It should be noted that, the manner of performing the CCA by the UE includes at least one of the following ways.

In a first way, every K sub-frames only include one initial CCA and this CCA is at a last symbol position of the sub-frame or a first symbol position of the sub-frame.

In a second way, every K sub-frames include one initial CCA and extended CCAs. A beginning position of the initial CCA is a pre-defined value or configured by the base station, and a difference between the position of initial CCA and a beginning time of the data transmission is a time duration of the initial CCA plus M unit time durations of the extended CCA.

K is an integer greater than or equal to 1, M is greater than or equal to the back-off value N of the extended CCA, N is configured by the base station or is a pre-defined value or is randomly selected by the UE from [0, CW], said CW is a pre-defined value or a variable value adjusted according to a feedback result of the base station or a variable value adjusted according to a detection result of the CCA execution of the UE.

It should be noted that, the sub-frame where the uplink data are transmitted is transmitted by a periodic or non-periodic channel sounding reference signal (SRS), structure of a sub-frame transmitted by the UE includes one of the followings.

The UE transmits the SRS at the last symbol of the sub-frame, wherein the sub-frame is used for knocking out an idle region of the CCA; and another UE in the next sub-frame is scheduled to be transmitted at a position of the next sub-frame schedule by detecting the SRS. Alternatively, the UE transmitted by the sub-frame enables another sub-frame to schedule the UE to be transmitted in the next sub-frame through a manner that a pre-defined symbol resource element (RE) is muting, and a muting pattern of the pre-defined symbol RE is cell-specific.
a symbol plus a physical uplink shared channel (PUSCH) having the duration of CCA are knocked out from an end of an uplink sub-frame, and a position of the knocked out PUSCH is used for transmitting the SRS and performing the CCA by the UE.

The SRS is transmitted at a beginning position of the last symbol, and a total duration of the SRS plus the CCA is equal to a length of one symbol.

The SRS is arranged at a first or a pre-defined symbol position for transmission, and the end of the sub-frame is the idle region for preforming the CCA by the UE.

The SRS is transmitted after the CCA is successfully performed and at a position before the sub-frame that transmits the uplink data.

In the present embodiment, also provided is a data transmission device for realizing the above embodiments and optional implementations, and the contents which has been described above will not be repeated. As used below, the term "module" may be a combination of software and/or hardware that achieves a predetermined function. Although the devices described in the following embodiments are optionally implemented in software, the implementation of hardware or a combination of software and hardware is also possible and contemplated.

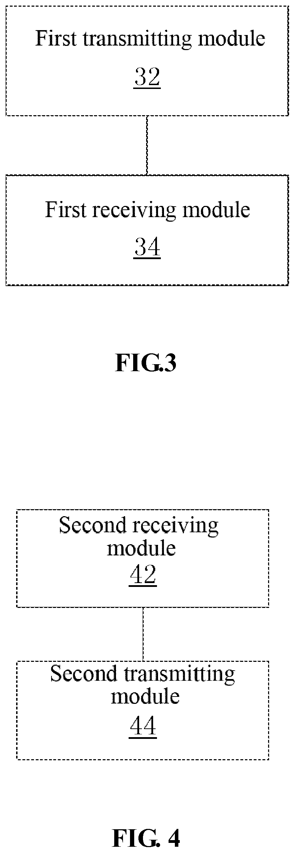

FIG. 3 is a structural block diagram I illustrating a data transmission device according to an embodiment of the present invention. The data transmission device is applied at a base station side and the present embodiment corresponds to the method embodiment in FIG. 1. As shown in FIG. 3, the device includes:
a first transmitting module 32 configured to transmit a configuration signaling to a user equipment (UE), wherein the configuration signaling carries a clear channel assessment (CCA) parameter of the UE and an uplink transmission parameter of the UE; and
a first receiving module 33 coupled to the first transmitting module 32 and configured to receive an uplink data which are transmitted by the UE according to the configuration signaling.

The CCA parameter involved in the present embodiment may include at least one of: a back-off value N of an extended CCA, a CCA window length CW, and a CCA beginning symbol position configured by the base station for the UE. The uplink transmission parameter involved in the present embodiment may include at least one of: indication information of sub-frame position, positions and quantity of physical resource blocks (PRB) assigned to each sub-frame, a modulation and coding scheme (MCS), a hybrid automatic repeat request (HARQ) process number, and a carrier indication information which are configured by the base station for the UE for data transmission in unlicensed carriers.

In optional implementations of the present embodiment, the CCA parameter and the uplink transmission parameter are determined by the base station through one of the following ways. The bases station determines the CCA parameter, the carrier indication information and the MCS based on a plurality of carrier measurement results reported by the UE. Alternatively, the base station determines the CCA parameter based on a statistic result. Alternatively, the base station configures the UEs, which are scheduled to a same sub-frame and distances between geographical positions of which are within a predefined range, with the same CCA parameter or the same set of CCA parameters. Alternatively, the base station determines the CCA parameter for each UE based on a service type or priority of the UE. When the base station schedules a plurality of UEs to perform data transmission in a same sub-frame, the base station instructs a multiplexed UE to only perform one initial CCA at a predetermined time. When only one UE is scheduled in one sub-frame, the base station configures the only one UE with a CCA manner of the initial CCA plus an extended CCA.

In addition, it should be noted that the CCA parameter of the UE configured by the base station related in the present embodiment includes: a difference between a beginning position where the UE performs the CCA and a beginning time of the data transmission is configured by the base station to be a duration of one initial CCA; or, the difference between a beginning time where the UE performs the CCA and the beginning time of the data transmission is configured by the base station to be the duration of the initial CCA and M unit time durations of the extended CCA, where M is a pre-defined integer value greater than or equal to zero; or, the difference between a time when the UE starts to perform the CCA and the beginning time of the data transmission is configured by the base station to be the duration of the initial CCA plus back-off value N and plus K unit time durations of the extended CCA, where K is a pre-defined integer value greater than or equal to zero.

Optionally, the sub-frame positions where the uplink data transmission involved in the present embodiment is located are determined through one of the following ways. Every sub-frame position where the uplink data transmission is located is determined by a pre-defined timing relationship of an uplink grant. Alternatively, a first sub-frame position of the uplink data transmission is determined according to the pre-defined timing relationship of the uplink grant, and remaining sub-frames are determined according to the indication information of sub-frame position in the configuration signaling. Alternatively, positions of all sub-frames of the uplink data transmission are determined according to the information of sub-frame position in the configuration signaling.

In optional implementations of the present embodiment, the first receiving module 34 is configured to receive the uplink data which are transmitted by the UE according to the configuration signaling by the following ways. The first receiving module 34 receives the uplink data which are transmitted by the UE from a first orthogonal frequency division multiplexing (OFDM) symbol of a sub-frame boundary; or first receiving module 34 receives the uplink data which are started to be transmitted from a first complete OFDM symbol after the CCA is successful; or the first receiving module 34 receives the uplink data which are started to be transmitted just after the CCA is successful.

Optionally, when the base station configures the UE with a plurality of sub-frames for transmission, downlink control information (DCI) of the plurality of sub-frames is carried by a physical downlink control channel (PDCCH). The indication information of positions of the plurality of sub-frames is bitmap indicating, and alternatively, positions of the plurality of sub-frames are indicated by an initial frame and number of consecutive sub-frames.

It should be noted that the configuration signaling involved in the present embodiment is a downlink control information (DCI) signaling and/or a radio resource control (RRC) signaling.

FIG. 4 is a structural block diagram II illustrating a data transmission device according to an embodiment of the present invention. The data transmission device is applied to the user equipment side, and the present embodiment corresponds to the method embodiment in FIG. 2. As shown I FIG. 4, the device includes:
a second transmitting module 42 configured to receive a configuration signaling transmitted by a base station, wherein the configuration signaling carries a clear channel assessment (CCA) parameter of the UE and an uplink transmission parameter of the UE; and
a second receiving module 44 coupled to the second transmitting module 42 configured to transmit uplink data to the base station according to the configuration signaling.

The CCA parameter involved in the present embodiment may include at least one of: a back-off value N of an extended CCA, a CCA window length CW, and a CCA beginning symbol position configured by the base station for the UE.

The uplink transmission parameter involved in the present embodiment may include at least one of: indication information of sub-frame position, positions and quantity of physical resource blocks (PRB) assigned to each sub-frame, a modulation and coding scheme (MCS), a hybrid automatic repeat request (HARQ) process number, and a carrier indication information which are configured by the base station for the UE for data transmission in unlicensed carriers.

In the present embodiment, the second transmitting module 44 is configured to transmit the uplink data to the base station according to the configuration signaling according to the following ways.

Before the uplink data are transmitted, when the back-off value or a value of a counter is reduced to zero, the UE continues performing the CCA to a beginning boundary of the uplink data transmission, and the UE transmits the uplink data when a channel is idle. Alternatively, the UE enters a waiting state, and starts to transmit the uplink data at an uplink data transmission time. Alternatively, the UE waits firstly, and then re-performs one initial CCA or the extended CCA in unit length at a pre-defined time prior to the uplink data transmission, and transmits the uplink data after the success of the re-performing one initial CCA or the extended CCA in unit length. Alternatively, the UE transmits an occupancy signal, and a time domain length or energy of the occupancy signal is less than a pre-defined threshold.

If the UE reaches a time of transmitting the uplink data according to the pre-defined timing relationship of the uplink grant and the value of the counter is not reduced to zero, the UE abandons transmission of the uplink data, clears the value of the counter, and re-performs the CCA; or the UE does not clear the value of the counter and continues performing the CCA until a value of a counter at a scheduled subsequent sub-frame boundary is reduced to zero, and performs the above uplink data transmission.

In another optional implementation of the present embodiment, the second transmitting module 44 is configured to transmit the uplink data to the base station according to the configuration signaling through the following ways.

After the UE succeeds in performing one initial CCA, the second transmitting module 44 directly transmits a retransmitted uplink data or uplink data having a high priority. The uplink data having a high priority includes acknowledge (ACK) information or non-acknowledge (NACK) information, channel state feedback information (CSI), a channel sounding reference signal (SRS) and a physical random access channel (PRACH).

The second transmitting module 44 transmits the uplink data or uplink data of a self-scheduled UE, after the UE succeeds in performing the CCA according to a pre-defined or configured contention window size or a configured back-off value.

The UE transmits the uplink data after the UE succeeds in performing the CCA according to the back-off value configured by the base station or a random back-off value generated by a variable contention window or a pre-defined contention window, wherein the UE is cross-carrier scheduled.

In still another optional implementation of the present embodiment, the second transmitting module 44 is configured to transmit the uplink data to the base station according to the configuration signaling through the following ways.

When the UE continuously schedules a plurality of sub-frames, the UE performs one CCA before a first transmission sub-frame, and after performing this CCA successfully the UE transmits the uplink data in a plurality of consecutive sub-frames satisfying an occupancy time. If a subsequent sub-frame is also scheduled by the UE, the UE receives an indication signaling transmitted by the base station. The indication signaling is used for notifying the UE transmitting the uplink data to vacate a last symbol of the sub-frame by a pre-defined time domain length or an indicated time domain length for other UE CAA, and is used for knocking out a physical uplink shared channel at a corresponding position.

Alternatively, the UE performs, according to a schedule for a next sub-frame indicated by the base station, the CCA at a position of a physical resource block (PRB) where the schedule is located.

Alternatively, the UE performs, according to a schedule transmission for the next sub-frame indicated by the base station, the CCA on remaining RBs of a system bandwidth excluding RBs where a continuous transmission UE is located.

Alternatively, the UE transmits the uplink data on the next sub-frame according to the schedule of the indication information transmitted by the base station.

In addition, in the present embodiment, the UE selects a CCA manner and the CCA parameter to perform CCA by itself, when the UE does not receive the CCA parameter transmitted by the base station.

It should be noted that, the manner of performing the CCA by the UE includes at least one of the following ways.

In a first way, every K sub-frames only include one initial CCA and this CCA is at a last symbol position of the sub-frame or a first symbol position of the sub-frame.

In a second way, every K sub-frames include one initial CCA and extended CCAs. A beginning position of the initial CCA is a pre-defined value or configured by the base station, and a difference between the position of initial CCA and a beginning time of the data transmission is a time duration of the initial CCA plus M unit time durations of the extended CCA.

K is an integer greater than or equal to 1, M is greater than or equal to the back-off value N of the extended CCA, N is configured by the base station or is a pre-defined value or is randomly selected by the UE from [0, CW], said CW is a pre-defined value or a variable value adjusted according to a feedback result of the base station or a variable value adjusted according to a detection result of the CCA execution of the UE.

It should be noted that, the sub-frame where the uplink data are transmitted is transmitted by a periodic or non-periodic channel sounding reference signal (SRS), and structure of a sub-frame transmitted by the UE includes one of the followings.

The UE transmits the SRS at the last symbol of the sub-frame, wherein the sub-frame is used for knocking out an idle region of the CCA; and another UE in the next sub-frame is scheduled to be transmitted at a position of the next sub-frame schedule by detecting the SRS. Alternatively, the UE transmitted by the sub-frame enables another sub-frame to schedule the UE to be transmitted in the next sub-frame through a manner that a pre-defined symbol resource element (RE) is muting, and a muting pattern of the pre-defined symbol RE is cell-specific.
a symbol plus a physical uplink shared channel (PUSCH) having the duration of CCA are knocked out from an end of an uplink sub-frame, and a position of the knocked out PUSCH is used for transmitting the SRS and performing the CCA by the UE.

The SRS is transmitted at a beginning position of the last symbol, and a total duration of the SRS plus the CCA is equal to a length of one symbol.

The SRS is arranged at a first or a pre-defined symbol position for transmission, and the end of the sub-frame is the idle region for preforming the CCA by the UE.

The SRS is transmitted at a position before the sub-frame that transmits the uplink data after the CCA is successfully performed.

Hereinafter, embodiments of the present application are described by means of optional embodiments of the present application.

The data transmission method provided in this optional embodiment may include the following process.

The base station transmits a schedule signaling DCI to a scheduled UE. The schedule signaling includes indication information of a plurality of sub-frames where the UE performs data transmission, and a specific frequency domain resource position indication, a carrier indication and other schedule information in each sub-frame.

In addition, the base station may further configure the scheduled UE with parameters associated with the CCA, for example, the beginning position of the CCA and/or the back-off value. In this optional embodiment, the base station configures the UEs, which are scheduled to a same sub-frame and distances between geographical positions of which are within a predefined range, with the same beginning position of the CCA and/or the back-off value, or with the same set of CCA parameters.

Optionally, the base station determines the relevant parameters of the LBT performed by the UE according to the service type and the priority of the scheduled UE.

The base station determines the relevant parameters of the LBT according to the number of the UEs scheduled in the same sub-frame.

Optionally, before the base station determines the schedule transmission parameters, the UE measures a plurality of unlicensed carriers and feeds back the result to the base station. this result is used for determining by the base station a specific carrier index of each UE schedule and the UEs scheduled to the same sub-frame of the same carrier, and the value N in a random back-off in eCCA configured by the base station for the UE if an extended clear channel assessment (eCCA) is existed. The value N is 3 or 2.

Optionally, resources of the UE are determined through the sub-frame and the carrier index. For example, the transmission begins from n+k (k is a pre-defined value and n is the time when the base station transmits the uplink grant) according to the timing relationship, four sub-frames are consecutively scheduled, and the sub-frame resources are indicated by signaling 1111 bitmap, or 11 is used for indicating only the number of scheduled sub-frames.

Optionally, when the UE is scheduled to be transmitted in the plurality of consecutive sub-frames, the first sub-frame position is determined according to the pre-defined relationship of the data transmission and the uplink grant, and the remaining sub-frames are determined according to the indication information of sub-frame position in the configuration signaling.

The PUSCH data are transmitted from the first OFDM symbol of the uplink sub-frame, or transmitted from the first complete OFDM symbol after the LBT is performed successfully.

The LBT parameter configured by the base station for the scheduled UE includes: the beginning position of the CCA is configured to be prior to the beginning time of the data transmission by the duration of one initial CCA; or the difference t between the beginning time of performing CCA by the UE and the time of data transmission is configured to exactly equal to the duration of one initial CCA plus M unit time durations of each eCCA; or the difference t between the beginning time of performing LBT and the time of data transmission is configured to exactly equal to the duration of one initial CCA plus the random back-off value N and further plus n unit time durations of each eCCA, where n is a pre-defined value.

Optionally, if the random back-off value N has been reduced to zero before the time of the data transmission, the UE continues performing the CCA until the beginning boundary of sub-frame and then transmits data; or the UE enters a waiting state and starts to transmit data at the time of data transmission; or the UE waits firstly, and then re-performs one initial CCA or the extended CCA in unit length at a pre-defined time prior to the uplink data transmission, and transmits the uplink data after the success of the re-performing one initial CCA or the extended CCA in unit length; or the UE transmits an occupancy signal, and a time domain length or energy of the occupancy signal is less than a pre-defined threshold.

If the value of N is still not reduced to 0 at the transmission time of PUSCH according to the timing relationship, the UE abandons transmission of this sub-frame, clears the N of the counter and re-performs the CCA next time; or the UE does not clear the N, continues performing CCA, and if the value of N is reduced to 0 at a scheduled subsequent sub-frame boundary the UE directly performs the data transmission. Alternatively, the UE blindly detects the occupancy signal and transmits the data at the time of data transmission when it is detected that the UE is in the local cell. Alternatively, the UE only performs the CCA on scheduled RBs.

If the value of N is reduced to 0, the time of data transmission is the boundary of the sub-frame and the UE directly performs the uplink transmission according to the structure of the sub-frame.

Optionally, when the UE does not receive the LBT-associated configuration information transmitted by the base station, the UE performs the CCA according to a pre-defined LBT manner.

The pre-defined manner is as follows. The UE starts to perform LBT after k moments after receiving the schedule signaling.

Optionally, the manner that the UE performs LBT is:
The UE starts to perform one initial CCA at a position which is before the data transmission by the time duration of one initial CCA, and performs the data transmission after the success.

When the base station schedules a plurality of UEs for performing data transmission in a same sub-frame, optionally, this LBT manner is employed.

Alternatively, the UE starts to perform LBT at a position which is prior to the data transmission by the time duration of one initial CCA and N unit time duration of the extended CCA, and performs the data transmission after the success, where N is a pre-defined value, and optionally N is less than or equal to 3.

Alternatively, the UE randomly selects a number from [0, CW] by itself every time as the random back-off value of the LBT, where the CW is a pre-defined value. Optionally, CW is less than or equal to 3.

Alternatively, the UE randomly selects a number from [0, CW] by itself every time as the random back-off value of the LBT, where the CW is a variable value adjusted according to the feedback result of the base station or the UE's own detection result.

Optionally, when the base station schedules only one UE in a sub-frame, the UE is configured by the base station to use this LBT manner or the UE is pre-defined to use this LBT manner.

Optionally, the specific LBT manner configured by the base station or selected by the UE is determined according to the data type. For retransmitted data or services having a high priority, the base station configures the UE with only one CCA. For the initial transmitted data, the UE performs CCA according to a pre-defined contention window size or pre-defined random back-off value. For the cross-carrier scheduled UE, the UE generates random back-off value by itself according to the pre-defined contention window size, or the back-off value is configured by the base station, or the contention window is variable.

Optionally, when the scheduling manner of the UE is multi-sub-frame scheduling, if no subsequent UE performs the CCA or the data transmission energy of this UE is less than a threshold of CCA detection, the UE may consecutively transmit a plurality of sub-frames. If a subsequent UE to be scheduled is existed, the base station provides an indication signaling and notifies the transmitted UE to vacate the last symbol by the duration of the CCA. Alternatively, the UE scheduled by the next sub-frame performs the CCA only on the PRB position where the scheduling is located. Alternatively, the UE scheduled for transmission in the next sub-frame performs CCA on the remaining RBs of the system bandwidth excluding the RB which consecutively transmits the UE. Alternatively, the base station transmits the indication information to the scheduled UE, which is transmitted in the next sub-frame even if the CCA is failed.

Optionally, when the UE performs the LBT and a delay period T arrives, the UE needs wait and perform CCA or data transmission with delay. The value of T is a pre-defined value.

Optionally, an end of each uplink transmission sub-frame has an idle region, for example, an OEFM symbol for performing CCA by the UE.

Optionally, when the UE is scheduled by a plurality of consecutively-transmitted sub-frames, if the next sub-frame does not schedule other UEs, this UE may consecutively transmit a plurality of sub-frames. If the next sub-frame schedules an UE, the base station transmits indication to the aforementioned UE. This UE makes the last symbol of this sub-frame to be idle for scheduling the UE to successfully perform the CCA on the next sub-frame.

Optionally, when sub-frame transmitting data is a sub-frame transmitted by a periodic or a non-periodic SRS, the structure of the transmission sub-frame of this UE adopts one of the followings.

In a first kind, the SRS is transmitted at the last symbol of the sub-frame and the idle region of this sub-frame is knocked out, other UEs scheduled in the next sub-frame is also transmittable at the scheduled position in the next sub-frame by detecting the SRS. Alternatively, the UE transmitted by the sub-frame enables another sub-frame to schedule the UE to be transmitted in the next sub-frame through a manner that a pre-defined symbol resource element (RE) is muting, and a muting pattern of the pre-defined symbol RE is cell-specific.

In a second kind, a symbol plus a PUSCH having the duration of the CCA are knocked out from the end of the uplink frame, and the position of the knocked PUSCH is used for transmitting the SRS and performing the CCA by another UE.

In a third kind, the SRS is transmitted at the beginning position of the last symbol, and the total duration of the SRS and the CCA is equal to the length of one symbol.

In a fourth kind, the SRS is arranged at a first or a pre-defined symbol position for transmission, and the end of the sub-frame is the idle region for preforming the CCA by another UE.

In a fifth kind, the SRS is transmitted after the CCA is successfully performed and before a position in the PUSCH for transmitting sub-frames. For example, the SRS is transmitted in the uplink pilot time slot (UpPTS).

After the scheduled UE transmits the uplink data in the sub-frame position where the scheduling is located after the success of performing the CCA according to the LBT parameters configured by the base station or selected by itself, and then performs blind detection at a corresponding positions according to the pre-defined timing relationship, or the UE feeds back the base station whether the data transmission is performed and the base station receives the data after receiving the feedback information.

The unlicensed carrier resource competition and data transmission methods provided in embodiments of the present invention are further described below in detail by means of accompanying drawings and specific embodiments.

### Embodiment I

In the present embodiment, a LBT-frame-based-equipment (FBE) mode and a LBT-load based equipment (LBE) of sites (base station, UE, home base station, and relay station) are briefly introduced.

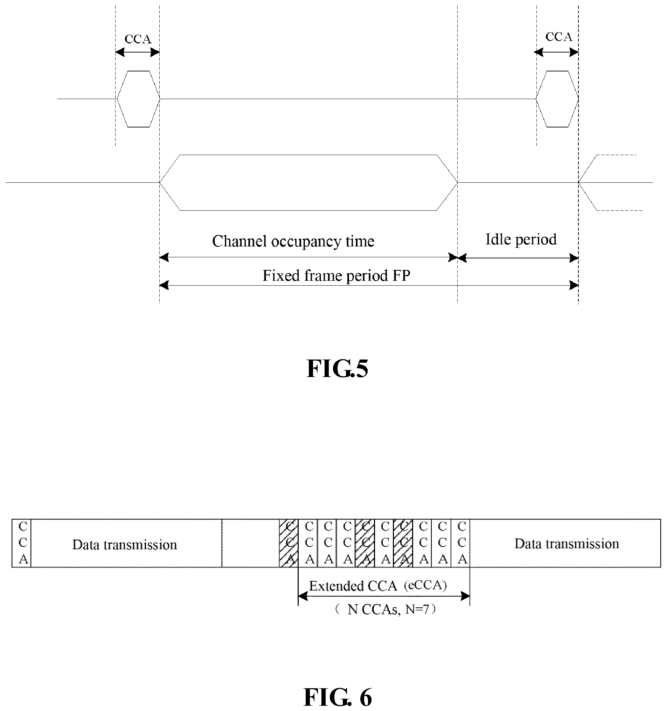

FIG. 5 is a schematic diagram illustrating a frame-based-equipment (FBE) LBT mechanism according to an optional embodiment of the present application. As shown in FIG. 5, for the FBE with a fixed transmission frame structure, the channel occupancy time and idle period constitute a fixed frame period (FP, Frame Period), the CCA detection is performed to the device in the idle period. When it is detected that the channel is idle, data transmission may be performed immediately, otherwise, the CCA detection is performed in the idle period of the next fixed frame period. For European FBEs, the channel occupancy time is 1ms to 10ms and the idle period is at least 5% of the channel occupancy time. CCA testing lasts for at least 20µs, and the CCA detection may be energy-based detection or signal-based detection.

FIG. 6 is a schematic diagram illustrating a load-based equipment (LBE) LBT mechanism according to an optional embodiment of the present application. As shown in FIG. 6, for the LBE, load-based competition, that is, when there is data transmission requirement, the equipment begins to perform CCA detection. If the channel is idle after CCA detection, the data transmission can be performed immediately. The maximum time that the data transmission may occupy is (13/32) × q ms, where q = {4,5,6 ... 31,32} is configurable; otherwise, if it is found that the channel is busy, it enters the extended CCA (eCCA) detection period, that is, it needs to perform CCA detection for X times. The value of X is stored in a counter, where X is randomly selected from 1 to q, and is referred to as the random back-off value. For each CCA detection (each CCA has a same detection time), if it is found that the channel is idle, the counter starts to decrease; if the channel is not idle, the counter does not decrease; when the counter decreases to 0, then data transmission may be started, the data transmission time is determined on demand, but the maximum data transmission time cannot exceed (13/32) × q ms.

### Embodiment II

In this optional embodiment, the process of performing LBT by the UE according to the configuration information is described.

When the uplink is FBE-based LBT, assuming that the moment when the base station transmits the uplink grant (UL grant) is n, the UE should perform uplink data transmission at time n + k according to the timing relationship, where k is a pre-defined value, for example, for Frequency Division Duplexing (FDD), K is less than or equal to 4, and for TDD (Time Division Duplexing), the value of k is greater. Then, the UE performs CCA at moment t_cca before n+k, where t cca is a pre-defined duration of CCA or initial CCA, for example, 34 microseconds or 20 microseconds. If the UE performs CCA successfully, the UE performs data transmission at time n + k. If it fails, data transmission cannot be performed.

When the uplink configuration is an LBE-based LBT, assuming that the UE should perform uplink data transmission at time n+k according to the timing relationship, in addition to configuring the same CCA beginning position for the UEs scheduled in the same sub-frame, the base station may also configure the same eCCA back-off value N for the UEs, where N is determined by the base station according to the experience value or the result reported by the UE, or N is less than or equal to the pre-defined parameter K, and K may be selected as 3 or 2. Or, the back-off value of each UE is randomly generated by itself.

Moreover, the base station notifies the scheduled UE through an RRC message or DCI.

Optionally, the beginning position of the CCA may be t=tiCCA+M*t_ecca, M is greater than or equal to N, tiCCA is the duration of the initial CCA, t_ecca is the duration of each CCA in the eCCA, which may be the same as the duration of the initial CCA or 1/m OFDM symbol, where m is 4 or 8, or each duration the eCCA is 9 microseconds or 10 microseconds or 16 microseconds.

Alternatively, the beginning position where the UE performs the CCA is a plurality of pre-defined positions, and the base station indicates by signaling which specific position the CCA starts. For example, four beginning positions of CCA are pre-defined, that is, the beginning boundary of the last two symbols of the sub-frame, the beginning boundary of the last half symbol of the sub-frame, the beginning boundary of the last symbol of the sub-frame, and the beginning boundary of the last slot of the sub-frame are positions where the UE can perform the CCA. Then, the base station indicates which specific position by 2-bit signaling, for example, 00 indicates starting from the last slot boundary, and 01 indicates starting from the last symbol boundary.

Alternatively, the base station notifies the above M value, and the UE deduces the position of the initial CCA by using the pre-defined initial CCA duration and the eCCA unit duration. For example, when the base station notifies that M is 5, the pre-defined duration of the initial CCA is 34 microseconds and the unit duration of the eCCA is 9 microseconds, the moment when the UE starts to perform CCA has a distance of 34+5*9=79 microseconds with respect to the data transmission.

In this way, the back-off value N is randomly generated from [0, M].

Then, UEs scheduled in the same sub-frame perform LBT according to the beginning time of the indication signaling CCA. Each time the eCCA succeeds, the value of N is reduced by one. Conversely, if it fails, the value of N remains unchanged.

Under normal conditions, for each UE, the value of N should be reduced to 0 at the time of data transmission, and then the data transmission is performed at the same time. But there are exceptions. For example, if the value of N of a scheduled UE is still not reduced to 0 at the data transmission time n+k, the UE cannot perform data transmission at the time n+k. Then, the value of N of the UE is cleared, and continues decreasing from the value of N in the cache next time. If the UE schedules multiple sub-frames consecutively, it is ensured the UE is transmitted in the next sub-frame. Alternatively, the UE starts again from the initial CCA next time, and the value of N returns to the initial value.

Alternatively, the occupation signals sent by other UEs are blindly detected, and if the detection succeeds, data transmission may also be performed at the time of data transmission.

If the value of N of a certain scheduled UE has been reduced to 0 at a certain time before the data transmission time n+k, the UE has two optional manners.

In a first manner, the UE transmits an occupancy signal, and the duration of the occupancy signal is less than a pre-defined value without causing the failure of performing CCA by other UE, and then waits for the specified data transmission time to perform data transmission.

In a second manner, the UE continues performing CCA.

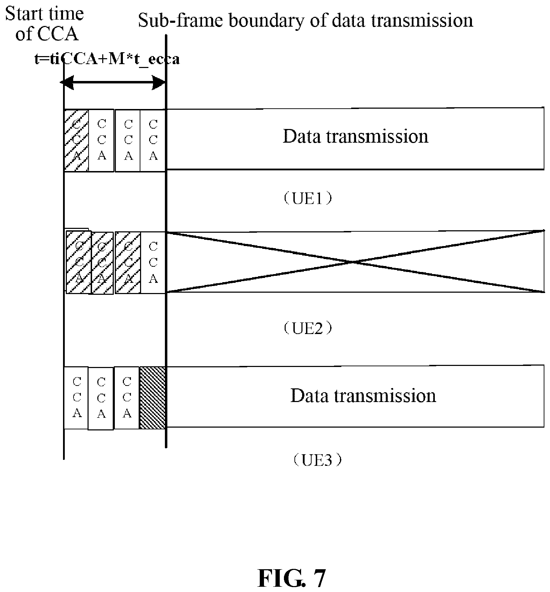

FIG. 7 is a schematic diagram illustrating a data transmission manner in an optional embodiment II of the present application. As shown in FIG. 7, three possible conditions for different UEs to perform LBT are illustrated. The base station schedules three UEs in the same sub-frame according to a result reported by the UE, and configures the same UE beginning position for the three UEs. The beginning position of the CCA and the sub-frame where the data transmission is located satisfies t=tiCCA+M*t_ecca and the value of N is configured to be 3. According to empirical statistics, the three UEs should be able to complete the uplink data transmission of the eCCA just at the pre-defined time of data transmission. But there may be exceptions, and the exceptions are handled as follows. For example, if the value of N of U2 is still not reduced to 0 at the timing of the data transmission, this UE cannot transmit data in the first sub-frame, and the value N of UE3 is reduced to 0 before the time of the data transmission, and this UE still cannot transmit data and transmits data when the data timing moment is arrived.

### Embodiment III

In this optional embodiment, the method of synchronous data transmission for multiple-user CCA under the LBE is illustrated.

In order to achieve that multiple UEs scheduled in the same sub-frame can perform data transmission simultaneously after completing CCA, a common waiting moment may be defined. A distance between this moment and the time of data transmission is the duration of n eCCAs, for example, the value of n is 1 or 2. This time is used for the UE which succeeds ahead in performing LBE competition waiting for the UE which fails in performing LBE competition. The UE which fails in performing LBE competition can complete the LBT in this period, and then the multiple UEs perform data transmission simultaneously, thereby achieving Frequency Division Multiplexing (FDM).

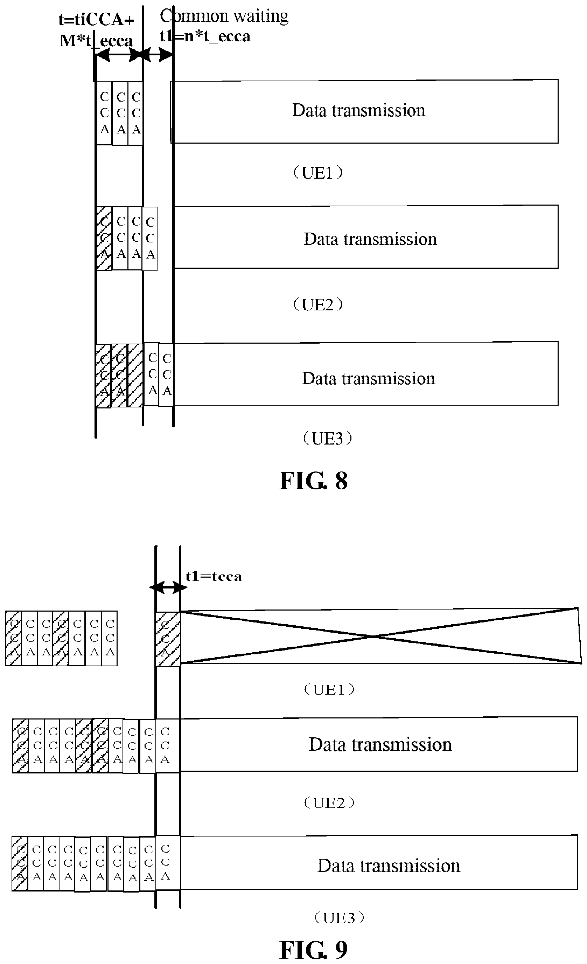

FIG. 8 is a schematic diagram illustrating a resource competition and a data transmission manner in an optional embodiment III of the present application. As shown in FIG. 8, it is assumed that the base station configures that three UEs performs CCA simultaneously at the same time, and the back-off values all are three, a waiting moment t1 is also defined, and the distance between t1 and the beginning position of the data transmission is 2 durations of eCCA. UE1 has completed the LBT successfully before the moment t1, and then the UE1 enters the waiting state before the data transmission and waits for a duration of two eCCAs as a unit, and then performs data transmission at the time of data transmission. If UE2 has not finished LBT at the moment t1, UE2 continues performing CCA. If UE2 has finished LBT before data transmission, the UE2 can perform data transmission simultaneously with other UEs which finish the LBT earlier, thereby achieving frequency multiplexing. UE3 has not finished the LBT before the data transmission, so UE3 cannot perform data transmission at the time of data transmission.

In this manner, the back-off value pf performing LBT by the UE may be configured by the base station, or may be generated by the UE itself.

Since the fastest access to Wi-Fi requires 34 microseconds, the UE that succeeds in CCA in advance will not be taken away by Wi-Fi even if it does not transmit any signal during the waiting time.

### Embodiment IV

How the method provided by the present application achieves uplink multi-user multiplexing is further described in this optional embodiment.

In order to ensure that the channel is idle when the UE performs the data transmission, after performing CCA and waiting for a period of time, some UEs need to perform one CCA again before the data transmission, and the duration is for example a pre-defined time length (34 microseconds or 9 microseconds or 10 microseconds). The data are transmitted after the success of CCA and cannot be transmitted if the CCA is not successful.

FIG. 9 is a schematic diagram illustrating a resource competition and a data transmission manner in an optional embodiment IV of the present application. As shown in FIG. 9, the base station schedules there UEs to transmit data in the same sub-frame and the base station configures that the UE begins to perform CCA at a certain time or the UE perform CCA according to a pre-defined position and the random back-off value N generated independently by itself. Assuming that the random back-off value generated by the UE1 is 5 and is reduced to 0 before the data transmission, the UE1 needs to enter a waiting state and re-preform one CCA at a moment tcca before the data transmission, for example, 20 microseconds or 10 microseconds or 9 microseconds. At this moment, other device such as a Wi-Fi signal may transmit a signal suddenly, causing the failure of channel detection of the UE1. As a result, the data transmission cannot be performed. Assuming that the random back-off value generated by the UE2 independently is seven, the back-off value is reduced to 0 just at a time before data transmission, and then the data are directly transmitted. Assuming that the random back-off value generated by the UE3 is 9 and is reduced to 0 before the data transmission, the UE3 enters a delay-transmitting-data and waiting state, and re-preforms one CCA at a moment tcca before the data transmission. If the US succeeds in CCA, the UE3 can perform the data transmission.

### Embodiment V

This optional embodiment further provides a detained description of performing CCA by the UE.

The UE may perform the CCA in the flowing ways.

In a first manner, the UE performs the LBT using the LBT, that is, the initial CCA is performed only once for each time. This manner is optionally adopted for higher priority services such as retransmission services or when the base station schedules multiple UEs to multiplex in the same sub-frame for transmission or the UE itself finds that the scheduled RB is smaller than the uplink bandwidth.

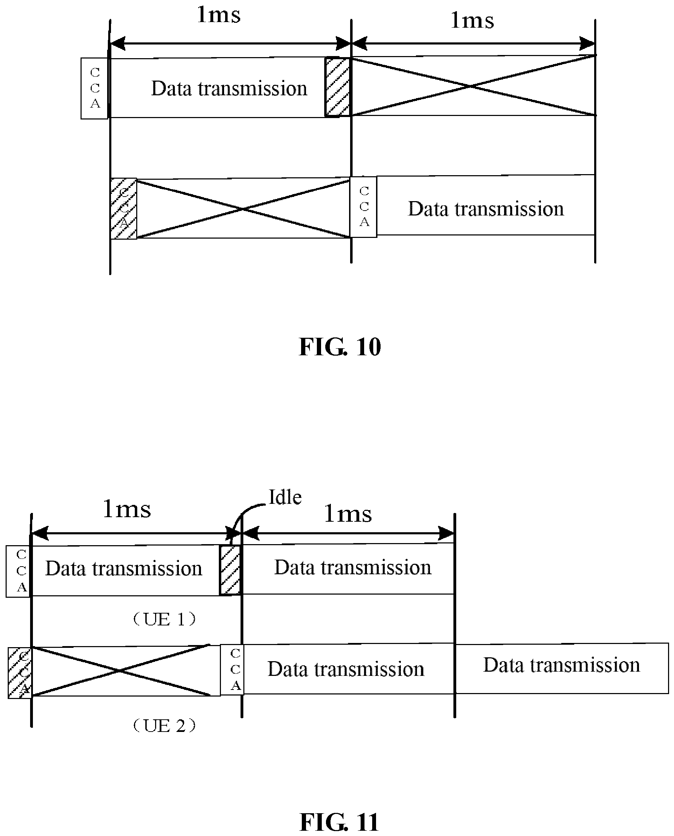

FIG. 10 is a schematic diagram illustrating a resource competition and a data transmission manner of a site in an optional embodiment V of the present application. As shown in FIG. 10, in this manner, the beginning position of performing CCA by the UE is a pre-defined value and is located at the end of the sub-frame with one duration of CCA from the sub-frame boundary, or at the beginning symbol of the sub-frame with a length of performing one CCA.

In a second manner, the performing CCA by the UE includes an initial CCA and extended CCAs, and the specific parameters may be self-selected or configured by the base station.

When the UE is scheduled in full bandwidth (that is, one sub-frame) and only one user is scheduled, this CCA manner is optionally adopted.

When the UE does not receive the LBT related configuration information corresponding to the base station, the UE performs LBT according to a pre-defined LBT parameters.

The pre-defined LBT parameters are: the contention window size CW of the random back-off of the UE CCA, CW is a fixed value, for example, 5, 4, 3or 2. For every schedule and every time, the UE generates the random back-off value N from the [0, CW] independently by itself. Alternatively, the random back-off value of the UE is a pre-defined value, for example, 2. Alternatively, the contention window size CW of the random back-off of UE is variable, for example, the contention window size CW is exponentially varied. For example, if the value of the first CW is 4, after the continuous competition for k times fails, the value of CW becomes 8 and then becomes 16, where k is a pre-defined value

Alternatively, the base station configures LBT related parameters for the scheduled UE. Optionally, the base station configures the scheduling UE with the location and/or back-off value N of the initial CCA. For example, the time difference between the beginning position of the CCA and the time of data transmission configured by the base station for the scheduled UE satisfies t =tiCCA+M*t_ecca. The UE then selects a random number from [1, M] as a back-off value by itself. Alternatively, the base station configures the same CCA position and the same back-off value or the same CCA parameter set for the UEs, distances between geographical positions of which are within a pre-defined range.

If the UE completes the LBT at the moment before the data transmission, the UE has four options. The UE continues performing CCA until data transmission. Alternatively, the UE stops CCA, waits for the data transmission moment, and then directly transmits the data. Alternatively, the UE stops and waits for a period of time, and then perform another CCA at the data transmission moment tcca, and if the CCA is successful, data transmission can be performed; otherwise, data transmission cannot be performed. Alternatively, the UE always transmits an occupancy signal in the RB where the scheduling is performed or the UE transmits the occupancy signal in full bandwidth, the time is very short or the energy is less than the pre-defined threshold and cannot prevent other UE CCA detection results from being idle.

If the LBT of the scheduled UE is still not successful before the data transmission, that is, the back-off value N is still not reduced to 0, the UE does not perform data transmission or the UE detects the occupancy signal sent by other UEs. If it is identified that it is sent by the UE within this cell, the data may be transmitted. Alternatively, the UE performs the CCA for one time at the moment tcca before the data transmission, and the CCA is performed only on the RB where the scheduling is performed. If the RB is found to be idle, data can be transmitted on the RB.

Moreover, when the UE encounters the delay period T during the process of performing LBT or data transmission, the UE waits, delays the CCA or data transmission, and then continues to perform the CCA or data transmission after the delay period T expires.

### Embodiment VI

The uplink frame structure is described in this optional experiment.

The frame structure may be different according to the situation of scheduled the UE.

In general, an end of each sub-frame is configured with an idle region for performing CCA by the UE, a length of which for example is one OFDM symbol length, or other values. When the base station schedules an UE to perform transmission on two or more uplink sub-frames, the UE may perform CCA only once. If successful, the UE may perform data transmission on PRBs corresponding to N sub-frames which are consecutively transmitted in the scheduling satisfying the occupancy time.

If there is another UE performing CCA at the same time, the base station transmits a signaling to notify the UE to vacate the last symbol of the sub-frame, as shown in FIG. 11. FIG. 11 is a schematic diagram illustrating uplink data transmission in an optional embodiment VI of the present application.

Alternatively, another UE performs CCA only on the scheduled PRB, and the position of this PRB is different from the position of the RB of the sub-frame where the UE that schedules multiple sub-frames for transmission is located. After the UE succeeds on the scheduled PRB, the UE may perform uplink data transmission on the corresponding scheduled RB.

Alternatively, UE scheduled by the subsequent sub-frame performs CCA on the remaining RBs of the RBs where the UE is scheduled to consecutively transmit multiple sub-frames.

For some situations, the base station may instruct the UE to perform data transmission directly without LBT. For example, the base station first performs LBT successfully and transmits the downlink data, and the downlink transmission time does not exceed the maximum occupancy time limit. In this case, the base station may instruct the UE to directly perform uplink data transmission without LBT, but the sum of the uplink data transmission time and the downlink transmission time does not exceed the maximum occupancy time limit.

### Embodiment VII

The present optional embodiment describes a frame structure when a transmission sub-frame is an SRS sub-frame.

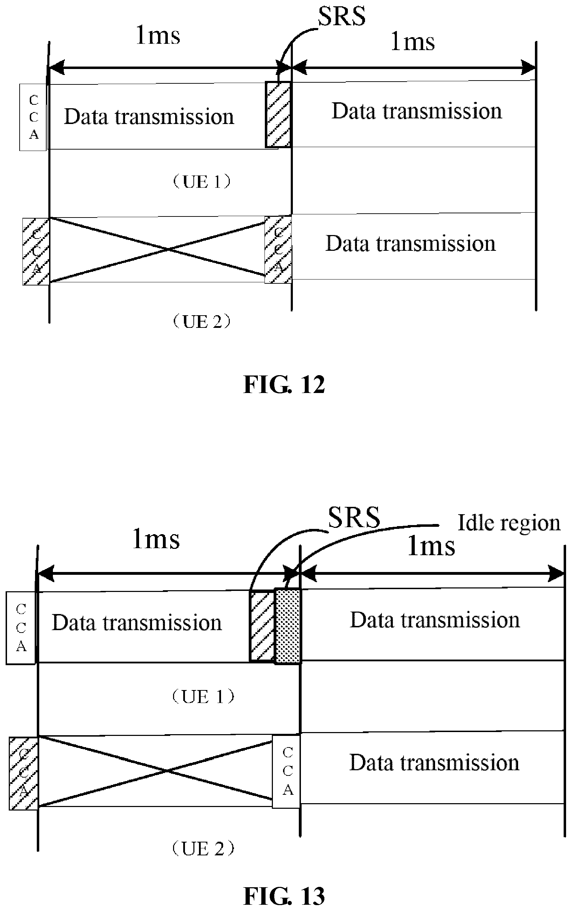

When the uplink sub-frame is exactly the sub-frame in which the periodic SRS or the non-periodic SRS is transmitted, one processing method is that the SRS is still transmitted at the last symbol. FIG. 12 is a schematic diagram illustrating an uplink sub-frame transmission mechanism in an optional embodiment VII of the present application. The frame structure is shown in FIG. 12.

In this way, UE1 which succeeds in competition transmits the SRS in the last symbol, that is, the sub-frame of UE1 has the same structure as the conventional UE. Another UE2 scheduled in the same cell and other scheduled UEs begin to perform CCA at the designated beginning position of CCA according to the configuration and scheduling information of the base station. Since the UE1 transmits SRS on this carrier, it is detected to be busy if the channel detection is performed, and then UE may continue to try to perform signal detection so as to determine whether the signal is transmitted by UE within this cell. After detecting the SRS of the same cell, the transmission is performed on the next sub-frame. Thus, the uplink multi-user FDM may be realized.

Alternatively, the base station instructs, through the DCI, that the UE does not perform CCA and performs data transmission according to the scheduling signaling directly in the next sub-frame.

Alternatively, the UE for data transmission adopts a way of using RE muting for pre-defining a certain PUSCH symbol. For example, for each RB, data of a RE is muted, and each cell has a specialized muting pattern. The UE determines whether UE within the present cell is transmitting data by detecting this pattern, and then can perform data transmission on the next sub-frame. In this way, it is also ensured that the data transmission of the UE scheduled by the next sub-frame will not be affected when the SRS is transmitted.

### Embodiment VIII

The present optional embodiment still describes the frame structure when the transmission sub-frame is the SRS sub-frame.

When the uplink sub-frame is exactly the sub-frame in which the periodic SRS or the non-periodic SRS is transmitted, another processing manner is as follow. The original idle region for performing CCA by the UE is reserved and the SRS is transmitted at the end of the sub-frame. This processing manner includes the following two kinds.

In the first kind, the time domain length of the idle region for performing CCA by the UE is unchanged, a symbol of PUSCH before the idle region is knocked out so as to transmit the SRS, as shown in FIG. 13. FIG. 13 is a schematic diagram illustrating an uplink transmission mechanism of two UEs in an optional embodiment VIII of the present application.

In the second kind, the original length of the SRS is compressed. A sum of the length of SRS and the length of the idle region is the length of one symbol. For example, the length of CCA is 20 microseconds or 16 microseconds or 9 microseconds. The remaining time of another one symbol is used for transmitting SRS.

### Embodiment IX

The present optional embodiment describes the frame-structure when the transmission sub-frame is the SRS sub-frame.

When the uplink sub-frame is exactly the sub-frame in which the periodic SRS or the non-periodic SRS is transmitted, in addition to the processing manners given in the seventh and eighth embodiments, the processing manner may be as follow.

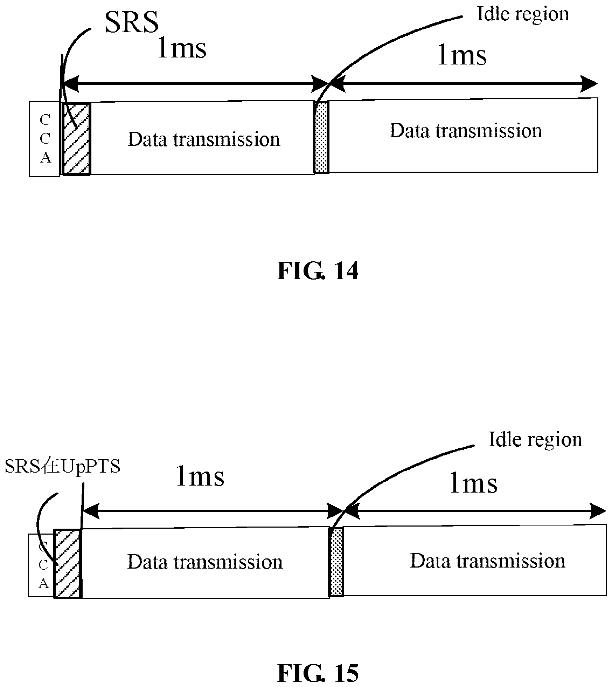

The SRS is placed at the initial one symbol of the sub-frame, as shown in FIG. 14, which is a schematic diagram showing a SRS sub-frame transmission method in an optional embodiment IX of the present application. Alternatively, the SRS is placed at other pre-defined symbols. Moreover, the PUSCH of the corresponding symbol position is knocked out, and the end of the sub-frame is still the idle region for performing CCA by the UE.

Alternatively, after the UE succeeds in performing CCA, the SRS is transmitted at the position before the PUSCH sub-frame, for example, the SRS is transmitted at the UpPTS. The frame structure of this case is shown in FIG. 15. FIG. 15 is a schematic diagram illustrating an uplink sub-frame transmission method in the optional embodiment IX of the present application. When the uplink and the downlink are transmitted on unlicensed carriers using a TDM manner, after the base station preempts the unlicensed carrier, this unlicensed carrier is used for downlink transmission for a period of time, an idle region is defined at the middle before the uplink transmission. On the one hand, it is used for uplink-downlink conversion, and on the other hand, it is used for performing CCA by the UE before the uplink transmission. After the UE performs CCA successfully, the SRS or the PRACH may be transmitted before the uplink sub-frame transmission.

### Embodiment X

The process of the uplink data transmission performed by the UE in the present optional embodiment is described.

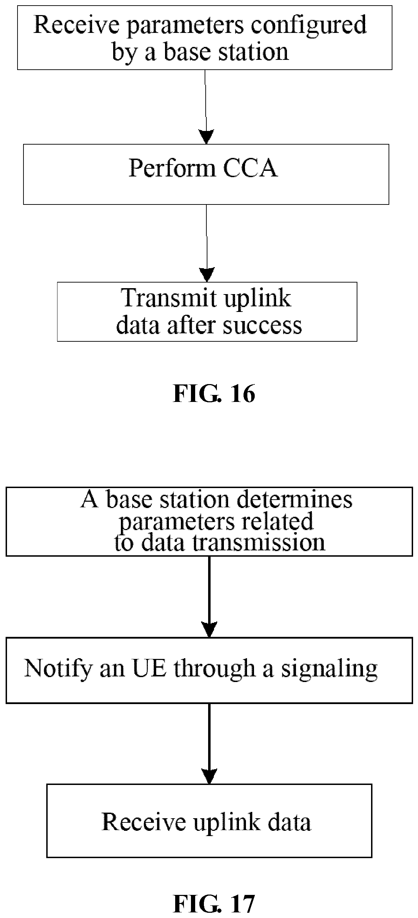

FIG. 16 is a flowchart illustrating implementation at a terminal side according to an optional embodiment X of the present application. The process is as shown in FIG. 16.

First, the UE receives a transmission parameter of the uplink data or a LBT-related parameter through a higher layer signaling or a physical DCI signaling.

The transmission parameter includes at least one of the following: carrier index information of an unlicensed carrier, positions and quantity of physical resource blocks (PRB) assigned to each sub-frame, a modulation and coding scheme (MCS), a hybrid automatic repeat request (HARQ) process number, and a carrier position index information which are configured by the base station for the UE for data transmission in unlicensed carriers.

When the UE is scheduled to multiple sub-frames, the parameters of these sub-frames may be completely identical or identical in part. For example, these sub-frames have the same PRB positions, or the PRB positions of these sub-frames are different from each other.

The LBT-related parameter includes at least one of: the beginning position of CCA, the back-off value N and the window length.

The carrier index and the back-off value of the UE transmitted by each sub-frame may be determined according to the measurement information reported by the UE.

Then, the UE performs LBT and data transmission according to received parameters.

If the UE performs CCA successfully at a pre-defined data transmission moment, the UE performs the uplink data transmission according to the parameter in the scheduling signaling.

When the UE is scheduled to a plurality of consecutive sub-frames, the UE may transmit multiple sub-frames continuously after contention with resources.

### Embodiment XI

The present optional embodiment describes the implementation process of the method provided by the present application on the base station side.

FIG. 17 is a flowchart illustrating implementation at a base station side according to an optional embodiment XI of the present application. The process is as shown in FIG. 17.

First, the base station determines UEs which are scheduled in a same sub-frame, and a scheduling transmission parameter of each UE or a configuration parameter involved in performing LBT by the UE.

Then, the base station notifies the UE of the relevant parameters through a RRC message or a DCI.

Then, the base station performs blind detection and reception of the uplink data according to parameters. Alternatively, the UE notifies the base station after the UE transmits the data, and the base station performs the reception after receiving the feedback information. The base station does not need to receive and demodulate the data, if the feedback information is not received or the feedback information indicates that the UE does not perform data transmission.

In another embodiment, a software is further provided for executing the technical solutions described in the above embodiments and optional embodiments.

In another embodiment, there is further provided a computer-readable storage medium having the above software stored thereon, which includes but is not limited to an optical disk, a floppy disk, a hard disk, an erasable Memory and so on.

An embodiment of the present invention further provides a computer-readable storage medium storing computer-executable instructions. When executed, the computer-executable instructions implement the data transmission method applied to the base station side.

An embodiment of the present invention further provides a computer-readable storage medium storing computer-executable instructions. When executed, the computer-executable instructions implement the data transmission method applied to the user equipment side.

It should be understood by those skilled in the art that each module or each step of the application of the present application may be implemented by common computing devices which can be centralized on a single computing device or distributed on a network formed by multiple computing devices. Optionally, they may be implemented with program code executable by a computing device so that they may be stored in a storage device for execution by a computing device, and in some cases, the steps shown or described may be executed in an order different from the order described herein, or they may be made into individual integrated circuit modules, or a plurality of modules or steps may be made into a single integrated circuit module. As such, the application is not limited to any specific combination of hardware and software.

The foregoing is only optional embodiments of the present application and is not intended to limit the present application. For those skilled in the art, the application may have various modifications and changes. Any amendments, equivalent substitutions and improvements made within the spirit and principle of the present application should be included in the protection scope of the present application.

### Industrial applicability

Embodiments of this application provide a data transmission method and device, solving a problem of how an uplink UE performs a LBT and implements multi-user frequency multiplexing in the related art when a LTE system operates in an unlicensed carrier frequency band, thereby improving the spectrum efficiency.

## Claims

1. A data transmission method, comprising:
transmitting, by a base station, a configuration signaling to a user equipment, UE, wherein the configuration signaling carries a clear channel assessment, CCA, parameter of the UE and an uplink transmission parameter of the UE; and
receiving, by the base station, uplink data which are transmitted by the UE according to the configuration signaling.

2. The method according to claim 1, wherein
the CCA parameter comprises at least one of: a back-off value N of an extended CCA, a CCA window length CW or a CCA beginning symbol position, configured by the base station for the UE;
the uplink transmission parameter comprises at least one of: indication information of a sub-frame position, positions and a number of physical resource blocks, PRBs, assigned to each sub-frame, a modulation and coding scheme, MCS, a hybrid automatic repeat request, HARQ, process number or a carrier indication information, configured by the base station for the UE for data transmission in an unlicensed carrier.

3. The method according to claim 2, wherein the CCA parameter and the uplink transmission parameter are determined by one of the following ways:
determining, by the base station, the CCA parameter, the carrier indication information and the MCS based on a plurality of carrier measurement results reported by the UE;
determining, by the base station, the CCA parameter based on a statistic result;
configuring, by the base station for UEs which are scheduled to a same sub-frame and distances between geographical positions of the UEs are within a predefined range, with a same CCA parameter or a same set of CCA parameters; or
determining, by the base station, the CCA parameter for each UE based on a service type or priority of the UE;
wherein when the base station schedules a plurality of UEs to perform data transmission in the same sub-frame, the base station indicates each of the multiplexed UEs to only perform one initial CCA at a predetermined time; when one UE is scheduled in one sub-frame, the base station configures the only one UE with a CCA manner of an initial CCA plus an extended CCA.

4. The method according to claim 2, wherein the configuring, by the base station, the CCA parameter of the UE comprises one of:
configuring, by the base station, a difference between a beginning position where the UE performs the CCA and a beginning time of the data transmission to be a duration of one initial CCA;
configuring, by the base station, a difference between a beginning time when the UE performs the CCA and the beginning time of the data transmission to be a duration of an initial CCA plus M unit time durations of performing the extended CCA, wherein M is a pre-defined integer value greater than or equal to 0; or
configuring, by the base station, a difference between a time when the UE starts to perform the CCA and the beginning time of the data transmission to be a duration of an initial CCA plus the back-off value N and K unit time durations of performing the extended CCA, wherein K is a pre-defined integer value greater than or equal to 0.

5. The method according to claim 2, wherein the sub-frame position where uplink data transmission is located is determined by one of the following ways:
every sub-frame position where the uplink data transmission is located is determined based on a pre-defined timing relationship of an uplink grant;
a first sub-frame position of the uplink data transmission is determined according to the pre-defined timing relationship of the uplink grant, and remaining sub-frames are determined based on the indication information of the sub-frame position in the configuration signaling; or
all sub-frame positions of the uplink data transmission are determined based on the indication information of the sub-frame position in the configuration signaling.

6. The method according to claim 5, wherein the receiving, by the base station, the uplink data which are transmitted by the UE according to the configuration signaling comprises one of:
receiving, by the base station, the uplink data which are transmitted by the UE from a first orthogonal frequency division multiplexing, OFDM, symbol of a sub-frame boundary;
receiving, by the base station, the uplink data which are started to be transmitted by the UE from a first complete OFDM symbol after the CCA is successful; or
receiving, by the base station, the uplink data which are started to be transmitted by the UE after the CCA is successful.

7. The method according to claim 5, wherein when the base station configures the UE with a plurality of sub-frames for transmission, downlink control information, DCI, of the plurality of sub-frames is carried by a physical downlink control channel, PDCCH, wherein indication information of positions of the plurality of sub-frames is a bitmap indication or positions of the plurality of sub-frames are indicated by an initial frame and the number of consecutive sub-frames.

8. The method according to claim 1, wherein the configuration signaling is a downlink control information, DCI, signaling and/or a radio resource control, RRC, signaling.

9. A data transmission method, comprising:
receiving, by a user equipment, UE, a configuration signaling transmitted by a base station, wherein the configuration signaling carries a clear channel assessment, CCA, parameter of the UE and an uplink transmission parameter of the UE; and
transmitting, by the UE, uplink data to the base station according to the configuration signaling.

10. The method according to claim 9, wherein
the CCA parameter comprises at least one of: a back-off value N of an extended CCA, a CCA window length CW or a CCA beginning symbol position, configured by the base station for the UE;
the uplink transmission parameter comprises at least one of: indication information of a sub-frame position, positions and a number of physical resource blocks, PRBs, assigned to each sub-frame, a modulation and coding scheme, MCS, a hybrid automatic repeat request, HARQ, process number or a carrier indication information, configured by the base station for the UE for data transmission in a unlicensed carrier.

11. The method according to claim 10, wherein the transmitting, by the UE, the uplink data to the base station according to the configuration signaling comprises one of:
before the uplink data are transmitted and when the back-off value or a value of a counter is reduced to zero, continuing performing, by the UE, the CCA, and transmitting the uplink data when reaching a beginning boundary of the uplink data transmission and a channel is idle; or
entering, by the UE, a waiting state and starting to transmit the uplink data at the time for the uplink data transmission; or waiting firstly, by the UE, and then re-performing the initial CCA or extended CCA in unit length once at a pre-defined time prior to the uplink data transmission, and transmitting the uplink data after successfully performing the initial CCA or the extended CCA in unit length; or transmitting an occupancy signal by the UE, wherein a time domain length or energy of the occupancy signal is less than a pre-defined threshold;
when the UE reaches a time of transmitting the uplink data according to the pre-defined timing relationship of an uplink grant and the value of the counter is not reduced to zero, abandoning, by the UE, transmission of the uplink data, clearing the value of the counter, and re-performing the CCA; or continuing performing, by the UE, the CCA without clearing the value of the counter, and performing the uplink data transmission when the value of the counter is reduced to zero at a scheduled subsequent sub-frame boundary.

12. The method according to claim 11, wherein the transmitting, by the UE, the uplink data to the base station according to the configuration signaling comprises:
directly transmitting, by the UE, retransmitted uplink data or uplink data having a high priority, after the UE succeeds in performing one initial CCA, wherein the uplink data having a high priority comprises acknowledge, ACK, information or non-acknowledge, NACK, information, channel state feedback information, CSI, a channel sounding reference signal, SRS, and a physical random access channel, PRACH;
transmitting, by the UE, the uplink data or uplink data of a self-scheduled UE, after the UE succeeds in performing the CCA according to a pre-defined or configured contention window size or a configured back-off value; and
transmitting, by the UE, the uplink data after the UE succeeds in performing the CCA according to a back-off value configured by the base station or a random back-off value generated by a variable contention window or a pre-defined contention window, wherein the UE is a UE cross-carrier scheduled.

13. The method according to claim 11, wherein the transmitting, by the UE, the uplink data to the base station according to the configuration signaling comprises one of:
performing, by the UE, CCA once before a first transmission sub-frame when the UE continuously schedules a plurality of sub-frames, transmitting the uplink data in a plurality of consecutive sub-frames satisfying an occupancy time after successfully performing the CCA; and receiving, by the UE, an indication signaling transmitted by the base station if a subsequent sub-frame is scheduled by the UE, wherein the indication signaling is used for notifying the UE which transmits the uplink data to vacate a last symbol of the sub-frame for a pre-defined time domain length or an indicated time domain length for other UE CAAs, and for knocking out a physical uplink shared channel, PUSCH, at a corresponding position;
performing, by the UE according to a schedule for a next sub-frame indicated by the base station, the CCA at a position of a PRB where the schedule is located;
performing, by the UE according to a schedule transmission for the next sub-frame indicated by the base station, the CCA on remaining RBs of a system bandwidth excluding RBs where a continuous transmission UE is located; or
transmitting, by the UE, the uplink data on the next sub-frame according to the schedule of the indication information transmitted by the base station.

14. The method according to claim 9, further comprising:
selecting, by the UE, a CCA manner and the CCA parameter to perform the CCA, when the UE does not receive the CCA parameter transmitted by the base station.

15. The method according to claim 12 or 13, wherein a manner that the UE performs CCA comprises at least one of:
every K sub-frames only include one initial CCA and the CCA is at a last symbol position of the sub-frame or a first symbol position of the sub-frame;
every K sub-frames include one initial CCA and extended CCAs, wherein a beginning position of the initial CCA is a pre-defined value or is configured by the base station, and a difference between the position of the initial CCA and a beginning time of the data transmission is a time duration of the initial CCA plus unit time durations of M extended CCAs,
wherein K is an integer greater than or equal to 1, M is greater than or equal to the back-off value N of the extended CCA, N is configured by the base station or is a pre-defined value or is randomly selected by the UE from [0, CW], the CW is a pre-defined value or a variable value adjusted according to a feedback result of the base station or a variable value adjusted according to a detection result of the UE performing the CCA.

16. The method according to claim 15, wherein the duration of the initial CCA as well as the unit time duration of the extended CCA are pre-defined values.

17. The method according to claim 9, wherein when the sub-frame where the uplink data are transmitted is a sub-frame transmitted by a periodic or non-periodic channel SRS, a structure of a sub-frame transmitted by the UE includes one of the followings:
the UE transmits the SRS at the last symbol of the sub-frame, wherein the sub-frame is used for knocking out an idle region of the CCA; another UE in the next sub-frame is scheduled to be transmitted at a position of the next sub-frame schedule by detecting the SRS; or the UE transmitting the sub-frame enables another sub-frame to schedule the UE to transmit in the next sub-frame through a manner that a pre-defined symbol RE is muting, wherein a muting pattern of the pre-defined symbol RE is cell-specific;
a symbol plus a PUSCH having the duration of CCA are knocked out from an end of an uplink sub-frame, wherein a position of the knocked out PUSCH is used for transmitting the SRS and performing the CCA by the UE;
the SRS is transmitted at a beginning position of the last symbol, wherein a total duration of the SRS plus the CCA is equal to a length of one symbol;
the SRS is arranged at a position of a first or pre-defined symbol of a subframe for transmission, wherein the end of the sub-frame is the idle region for preforming the CCA by the UE;
the SRS is transmitted at a position before the sub-frame that transmits the uplink data after the CCA is successfully performed.

18. A data transmission device, applied to a base station side, comprising:
a first transmitting module configured to transmit a configuration signaling to a user equipment, UE, wherein the configuration signaling carries a clear channel assessment, CCA, parameter of the UE and an uplink transmission parameter of the UE; and
a first receiving module configured to receive uplink data which are transmitted by the UE according to the configuration signaling.

19. A data transmission device, applied to a user equipment, UE, side, comprising:
a second receiving module configured to receive a configuration signaling transmitted by a base station, wherein the configuration signaling carries a clear channel assessment, CCA, parameter of the UE and an uplink transmission parameter of the UE; and
a second transmitting module configured to transmit uplink data to the base station according to the configuration signaling.
